# EUROPÄISCHE PATENTANMELDUNG

(11) **EP 0 877 475 A1**
(43) Veröffentlichungstag der Anmeldung: **11.11.1998**
(21) Anmeldenummer: 98107790.2
(22) Anmeldetag: 29.04.1998
(51) Int. Cl.: H02P 9/46, H02P 9/48

(54) **Verfahren zur Regelung der in ein Netz einzuspeisenden Ströme bei windkraftanlagen sowie nach diesem Verfahren arbeitende Schaltung**

(30) Priorität: 07.05.1997 DE 19719308
(71) Anmelder: NORDEX Balcke-Dürr GmbH, 18230 Ostseebad Rerik (DE)
(72) Erfinder: Petzoldt, Jürgen, 18057 Rostock (DE); Schütt, Torsten, 18198 Stäbelow (DE); Rädel, Uwe, 98693 Ilmenau (DE); Schukart, Thomas, 18106 Rostock (DE); Scholz, Dieter, 44795 Bochum (DE)
(74) Vertreter: Stenger, Watzke & Ring Patentanwälte

(57) **Zusammenfassung**

Die Erfindung betrifft ein Verfahren zur Regelung der in ein Netz einzuspeisenden Ströme, insbesondere der bei Einschalt- und Umschaltvorgängen auftretenden Überströme, bei Windkraftanlagen mit Asynchrongeneratoren (3). Weiterhin betrifft die Erfindung eine nach diesem Verfahren arbeitende Schaltung. Um das Auftreten von unzulässig hohen Überströmen insbesondere bei Einschalt - und Umschaltvorgängen zu verhindern, wird schaltungsmäßig vorgeschlagen, daß Kondensatoren (10) zur Blindleistungskompensation stufenweise zuschaltbar einem mit einer Bypass-Schaltung (9) versehenen Drehstromsteller (7) vorgeschaltet sind, so daß der gesamte in das Netz (5) einzuspeisende Strom durch den Drehstromsteller (7) reduzierbar ist, und daß nach Überschreiten eines vorgebbaren in das Netz (5) einzuspeisenden Maximalstroms im übersynchronen Drehzahlbereich des Generators (3) mindestens eine Schalteinrichtung (12) zur Regelung des in das Netz (5) einzuspeisenden Stroms zuschaltbar ist, wobei die Zuschaltung der mindestens einen Schalteinrichtung (12) mit Hilfe einer Steuergröße der Schalteinrichtung (12) erfolgt.

## Beschreibung

Die Erfindung betrifft ein Verfahren zur Regelung der in das Netz einzuspeisenden Ströme, insbesondere der bei Einschalt- und Umschaltvorgängen auftretenden Überströme, bei Windkraftanlagen mit Asynchron-Generatoren. Die Erfindung betrifft weiterhin eine nach diesem Verfahren arbeitende Schaltung mit einem Meßpunkt zur Ermittlung des Ist-Wertes des in das Netz einzuspeisenden Stroms, einem Drehstromsteller zur Regelung des in das Netz einzuspeisenden Stroms im Bereich bis zur Synchrondrehzahl des Generators, zuschaltbaren Kondensatoren zur Blindleistungskompensation sowie mit einer mit einem Schütz versehenen, den Drehstromsteller überbrückenden Bypass-Schaltung.

Verfahren sowie Schaltungen der eingangs genannten Art zur Regelung der in das Netz einzuspeisenden Ströme bei Windkraftanlagen sind in verschiedenen Formen aus der Praxis bekannt. Ziel dieser Verfahren ist es, die insbesondere bei Einschalt- und Umschaltvorgängen sowie hohen Windgeschwindigkeiten auftretenden Überströme zu dämpfen, da die die Netze betreibenden Energieversorgungsunternehmen zum Schutz ihrer Netze vor zu großen Schwankungen durch ungleichmäßige Stromeinspeisung durch die an das Netz angeschlossenen Kraftanlagenbetreiber nur geringe Überströme dulden. Daraus ergibt sich, daß die installierbare Leistung von Windkraftanlagen an einem Verknüpfungspunkt mit der Höhe der Überströme sinkt. Bei den aus dem Stand der Technik bekannten Windkraftanlagen wird der Antriebsstrang der Windkraftanlage durch die Auftriebskräfte, die durch den Wind bedingt an den Flügeln auftreten, beschleunigt. Der an die Windkraftanlage angeschlossene Generator wird beim Erreichen einer bestimmten Drehzahl mittels eines Drehstromstellers an das starre Netz eingekoppelt, wobei der Drehstromsteller zur Regelung des in das Netz einzuspeisenden Stroms dient. Um weiterhin eine Kompensation des Blindleistungsanteils des in das Netz einzuspeisenden Stroms zu ermöglichen, sind zuschaltbare Kondensatoren vorgesehen. Mit diesem bekannten Verfahren ist es nur bei relativ geringen Windgeschwindigkeiten möglich, die auftretenden Überströme im Bereich des Anlagennennstroms zu halten. Ohne zusätzliche Maßnahmen erreicht der k-Faktor bei solchermaßen geregelten Windkraftanlagen bei Nennwindgeschwindigkeiten von 15 m/sek. Werte von 1,8 bis 2,5, so daß die Windkraftanlagen nicht ans Netz gekoppelt werden, da ansonsten unzulässig hohe Überströme in das Netz eingespeist würden, oder die installierbare Leistung kleiner als bei Anlagen mit kleinem k-Faktor ist.

Der Erfindung liegt die **Aufgabe** zugrunde, ein Verfahren zur Regelung der in das Netz einzuspeisenden Ströme zu schaffen, das das Auftreten von unzulässig hohen Überströmen verhindert. Weiterhin liegt der Erfindung die Aufgabe zugrunde, eine Schaltung zur Durchführung dieses Verfahrens zu schaffen.

Die verfahrensmäßige **Lösung** dieser Aufgabenstellung ist gekennzeichnet durch die Verfahrensschritte:
a) Messen des aktuellen in das Netz einzuspeisenden Stroms und Bestimmen des Schein-, Wirk- und Blindanteils dieses Stroms,
b) Zuschalten der Windkraftanlage über einen Drehstromsteller und Regeln des gemessenen, in das Netz einzuspeisenden Stroms auf einen vorgebbaren Sollwert,
c) stufenweises Zuschalten von Kondensatoren zur Blindleistungskompensation,
d) Durchschalten des Drehstromstellers oder Bypass-Schaltung über ein Schütz, sobald nach Überschreiten der Synchrondrehzahl des Generators der gemessene, in das Netz einzuspeisende Strom nicht mehr begrenzt werden muß und
e) nach erneutem Überschreiten des maximalen Sollstroms geregeltes Zuschalten einer Schalteinrichtung zur Regelung des in das Netz einzuspeisenden Stroms mit Hilfe einer Steuergröße der Schalteinrichtung.

Durch dieses erfindungsgemäße Regelverfahren ist es möglich, den k-Faktor für nahezu alle Windgeschwindigkeiten auf einen Wert von ca. k = 1,1 zu begrenzen. Hierdurch verringern sich die bei Schaltvorgängen nicht vermeidbaren Spannungsschwankungen im Verbundnetz der Energieversorgungsunternehmen. Aufgrund des im wesentlichen konstanten k-Faktors ist es möglich, die nach diesem Regelverfahren arbeitenden Windkraftanlagen mit einer höheren installierbaren Leistung am Verknüpfungspunkt zum Verbundnetz zu versehen, da - wie voranstehend dargelegt - die Netzverträglichkeit aufgrund der erfindungsgemäßen Regelung erheblich verbessert wird.

Gemäß einer bevorzugten Ausführungsform des Verfahrens wird die Schalteinrichtung zur Regelung des in das Netz einzuspeisenden Stroms parallel zum Generator geschaltet.

Schaltungstechnisch wird die Aufgabenstellung dadurch gelöst, daß die Kondensatoren zur Blindleistungskompensation stufenweise zuschaltbar dem mit der Bypass-Schaltung versehenen Drehstromsteller am Anschlußpunkt vorgeschaltet sind, so daß der gesamte in das Netz einzuspeisende Strom durch den Drehstromsteller reduzierbar ist, und daß nach Überschreiten eines vorgebbaren, in das Netz einzuspeisenden maximalen Sollstroms im übersynchronen Drehzahlbereich des Generators mindestens eine Schalteinrichtung zur Regelung des in das Netz einzuspeisenden Stroms am gleichen Anschlußpunkt zuschaltbar ist, wobei die Zuschaltung der mindestens einen Schalteinrichtung mit Hilfe einer Steuergröße der Schalteinrichtung erfolgt.

Die erfindungsgemäße Schaltung hat den Vorteil, daß die kapazitive Kompensation des Blindanteils des in das Netz einzuspeisenden Stroms vor der Regelung des einzuspeisenden Stroms durch den Drehstromsteller erfolgt, so daß diese Kompensation des Blindanteils dazu führt, daß der durch den Drehstromregler zu regelnde Scheinanteil im Vergleich zum Stand der Technik deutlich geringer ist. Aus diesem Grund ist es bei der erfindungsgemäßen Schaltung möglich, den Drehstromsteller entweder im Vergleich zum Stand der Technik kleiner zu dimensionieren oder aber die mit dieser Schaltung versehene Windkraftanlage bei gleichbleibender Dimensionierung des Drehstromstellers mit einer höheren installierbaren Leistung auszustatten. Im übersynchronen Drehzahlbereich des Generators wird bei dieser erfindungsgemäßen Schaltung eine Schalteintrichtung zur Regelung des in das Netz einzuspeisenden Stroms zugeschaltet. Mit dieser Schalteinrichtung ist es möglich, über einen Soll-Ist-Vergleich den in das Netz einzuspeisenden Strom zu regeln und damit den k-Faktor im Bereich von k = 1,1 zu begrenzen.

Gemäß einer bevorzugten Ausführungsform der Erfindung besteht die mindestens eine Schalteinrichtung aus Widerständen und einem Schaltelement, beispielsweise einem Drehstromsteller oder einem Schütz. Insbesondere durch die Verwendung von über die Schaltelemente zuschaltbaren Widerständen ist es mit Hilfe der Schalteinrichtung leicht möglich, überwiegend den Wirkanteil des in das Netz einzuspeisenden Stroms zu regeln, wobei als Steuergröße für diese Regelung der am Netzeinspeisepunkt gemessene Ist-Wert herangezogen wird.

Schließlich wird mit der Erfindung vorgeschlagen, daß die Schalteinrichtung zur Regelung des in das Netz einzuspeisenden Stroms parallel zum Generator geschaltet ist.

Weitere Merkmale und Vorteile der Erfindung ergeben sich aus der nachfolgenden Beschreibung der zugehörigen Zeichnung, in der ein Ausführungsbeispiel einer erfindungsgemäßen Schaltung zur Regelung der in das Netz einzuspeisenden Ströme bei Windkraftanlagen schematisch dargestellt ist. In der Zeichnung zeigt:
- Fig. 1: einen schematischen Schaltungsaufbau gemäß dem Stand der Technik und
- Fig. 2: einen schematischen Schaltungsaufbau einer erfindungsgemäßen Schaltung.

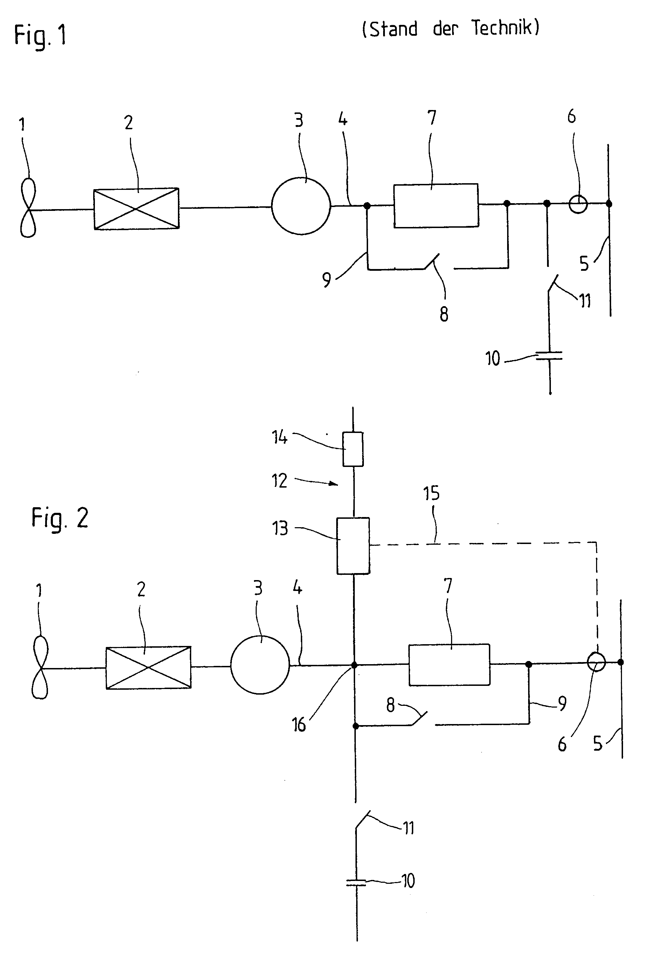

Die den Stand der Technik wiedergebende Schaltung gemäß Fig. 1 zeigt den Triebstrang einer Windkraftanlage bestehend aus einem Rotor 1, einem Getriebe 2 und einen Generator 3 zur Stromerzeugung. Der mit dem Generator 3 erzeugte Strom wird über Leitungen 4 in ein Netz 5 eingespeist. Insbesondere bei Einschalt- und Umschaltvorgängen des Generators 3 sowie bei hohen Windgeschwindigkeiten werden durch den Generator 3 Überströme erzeugt, die zu Spannungsschwankungen im Netz 5 führen können. Die die Netze 5 betreibenden Energieversorgungsunternehmen geben daher in Abhängigkeit der Netzkurzschlußleistung Maximalwerte für die in das Netz 5 einzuspeisenden Ströme an. Aus diesem Grund ist es für den Betrieb von Energieerzeugungsanlagen im allgemeinen und im vorliegenden Fall für den Betrieb von Windkraftanlagen notwendig zu verhindern, daß diese auftretenden Überströme in das Netz 5 eingespeist werden.

Zur Regelung des in das Netz 5 einzuspeisenden Stroms wird bei der Schaltung gemäß dem Stand der Technik der in das Netz 5 einzuspeisende Strom an einem Meßpunkt 6 gemessen. Ein Drehstromsteller 7 wird zur Regelung des in das Netz einzuspeisenden Stroms zugeschaltet. Dieser Drehstromsteller 7 regelt den in das Netz 5 einzuspeisenden Strom bis dieser den vorgegebenen Soll-Wert unterschreitet. Anschließend wird der Drehstromsteller 7 auf Null zurückgefahren bzw. über eine mit einem Schütz 8 versehene Bypass-Schaltung 9 überbrückt. Zur Blindleistungskompensation des in das Netz 5 einzuspeisenden Stroms weist diese aus dem Stand der Technik bekannte Schaltung Kondensatoren 10 auf, die über ein Schütz 11 zuschaltbar sind. Wie aus der Darstellung ersichtlich, ist diese Kompensationsschaltung so angeordnet, daß sie den Blindanteil des in das Netz einzuspeisenden Stroms kompensiert.

Bei der in Fig. 2 dargestellten Schaltung zur Regelung des in das Netz 5 einzuspeisenden Stroms ist wiederum ein Drehstromsteller 7 vorgesehen, um im Zeitbereich bis zur Unterschreitung des vorgegebenen Soll-Wertes den in das Netz 5 einzuspeisenden Strom zu regeln. Der Meßpunkt 6 zum Erfassen des in das Netz 5 einzuspeisenden Stroms ist direkt am Netzeinspeisepunkt angeordnet. Der Netzstrom wird dreiphasig erfaßt, so daß sowohl der Scheinstrom als auch der Wirk- und der Blindanteil als Momentanwerte ohne Totzeit erfaßt werden. Wie ein Vergleich der Schaltungen in Fig. 1 und 2 verdeutlicht, unterscheidet sich die Schaltung nach den dargestellten Ausführungsbeispielen vom Stand der Technik unter anderem dadurch, daß die über das Schütz 11 zuschaltbaren Kondensatoren 10 zur Blindleistungskompensation dem Drehstromsteller 7 vorgeschaltet sind, so daß der Blindanteil des durch den Drehstromsteller 7 zu regelnden Stroms durch den Drehstromsteller 7 kompensierbar bzw. reduzierbar ist. Hieraus ergibt sich, daß der Drehstromsteller 7 nur noch einen viel geringeren Scheinanteil des in das Netz 5 einzuspeisenden Stroms zu regeln hat. Dies kann wiederum einerseits dazu führen, daß der Drehstromsteller 7 nicht so groß zu dimensionieren ist, wie dies aus dem Stand der Technik bekannt ist, oder aber die Windkraftanlage bei gleichbleibend leistungsstarkem Drehstromsteller 7 mit einer höheren installierbaren Leistung ausgestattet werden kann.

Um auch im übersynchronen Drehzahlbereich des Generators 3 eine Regelung des in das Netz 5 einzuspeisenden Stroms ohne Reduzierung der Generatorspannung bewirken zu können, weist die Schaltung eine zuschaltbare Schalteinrichtung 12 zur Regelung des in das Netz 5 einzuspeisenden Stroms auf. Im dargestellten Ausführungsbeispiel besteht die Schalteinrichtung 12 aus einem Schaltelement 13 sowie Widerständen 14. Bei dem Schaltelement 13 kann es sich beispielsweise um einen Drehstromsteller oder ein Schütz handeln. Als Stellgröße für das Schaltelement 13 dient der am Meßpunkt 6 gemessene Ist-Wert des in das Netz 5 einzuspeisenden Stroms. Dieser gemessene Ist-Wert wird mit dem Soll-Wert, also dem maximal zulässigen Wert des in das Netz 5 einzuspeisenden Stroms verglichen. In Abhängigkeit von dem Ergebnis dieses Vergleiches werden über das Schaltelement 13 der Schalteinrichtung 12 die Widerstände 14 zugeschaltet, um den in das Netz 5 einzuspeisenden Strom zu regeln. Die Meßwerterfassung zwischen dem Meßpunkt 6 und dem Schaltelement 13 ist in Fig. 2 mit der Bezugsziffer 15 gekennzeichnet. Die Bezugsziffer 16 kennzeichnet den Anschlußpunkt der Kondensatoren 10 sowie der Schalteinrichtung 12 an die Leitung 4.

Die in Fig. 2 dargestellten Schaltung zur Regelung des in das Netz 5 einzuspeisenden, von dem Generator 3 der Windkraftanlage erzeugten Stroms arbeitet folgendermaßen:

Der Triebstrang der Windkraftanlage wird durch die Auftriebskräfte, die durch den Wind bedingt an dem Rotor 1 angreifen, beschleunigt. Der Generator 3 wird beim Erreichen einer bestimmten Drehzahl mittels des Drehstromstellers 7 an das Netz 5 eingekoppelt, wobei durch den Drehstromsteller 7 eine Regelung des Stroms erfolgt. Am Meßpunkt 6 wird der Strom dreiphasig erfaßt, so daß sowohl der Scheinstrom als auch der Wirk- und der Blindanteil als Momentanwerte ohne Totzeit bekannt sind. Beim Unterschreiten des vorgegebenen Sollstromwertes wird der Drehstromsteller 7 auf Null zurückgefahren und der Drehstromsteller 7 durch Schaltung des Schützes 8 über die Bypass-Schaltung 9 überbrückt. Unmittelbar nach der Schaltung des die Bypass-Schaltung 9 schaltenden Schützes 8 oder vorher werden über das Schütz 11 die Kondensatoren 10 zur Blindleistungskompensation stufenweise zugeschaltet. Wenn anschließend im übersynchronen Drehzahlbereich des Generators 3 am Meßpunkt 6 ein über dem maximalen Soll-Wert liegender Wert des in das Netz 5 einzuspeisenden Stroms gemessen wird, werden über das Schaltelement 13 der Schalteinrichtung 13 dreiphasige ohmsche Widerstände 14 zugeschaltet. Die Zuschaltung der Widerstände 14 erfolgt in Abhängigkeit des am Meßpunkt 6 gemessenen, in das Netz 5 einzuspeisenden Stroms.

Mit einer solchermaßen ausgestalteten Schaltung ist es möglich, für nahezu alle Windgeschwindigkeiten den k-Faktor auf einen Wert von ca. k = 1,1 zu begrenzen. Dadurch verringern sich die bei Schaltvorgängen nicht vermeidbaren Spannungsschwankungen im Netz 5 der Energieversorgungsunternehmen.

### Bezugszeichenliste

- 1: Rotor
- 2: Getriebe
- 3: Generator
- 4: Leitung
- 5: Netz
- 6: Meßpunkt
- 7: Drehstromsteller
- 8: Schütz
- 9: Bypass-Schaltung
- 10: Kondensator
- 11: Schütz
- 12: Schalteinrichtung
- 13: Schaltelement
- 14: Widerstand
- 15: Meßwerterfassung
- 16: Anschlußpunkt

## Patentansprüche

1. Verfahren zur Regelung der in ein Netz einzuspeisenden Ströme, insbesondere der bei Einschalt- und Umschaltvorgängen auftretenden Überströme, bei Windkraftanlagen (2) mit polumschaltbaren Asynchrongeneratoren (3),
**gekennzeichnet durch**
die Verfahrensschritte:
a) Messen des aktuellen in das Netz (5) einzuspeisenden Stroms und Bestimmen des Schein-, Wirk- und Blindanteils dieses Stroms,
b) Zuschalten der Windkraftanlage über einen Drehstromsteller (7) und Regeln des gemessenen in das Netz (5) einzuspeisenden Stroms auf einen vorgebbaren Soll-Wert,
c) stufenweises Zuschalten von Kondensatoren (10) zur Blindleistungskompensation,
d) Durchschalten des Drehstromstellers (7) oder Bypass-Schaltung (9) über ein Schütz (8), sobald nach Überschreiten der Synchrondrehzahl des Generators (3) der gemessene, in das Netz (5) einzuspeisende Strom nicht mehr begrenzt werden muß und
e) nach erneutem Überschreiten des maximalen Sollstroms geregeltes Zuschalten einer Schalteinrichtung (12) zur Regelung des in das Netz (5) einzuspeisenden Stroms mit Hilfe einer Steuergröße der Schalteinrichtung (12).

2. Verfahren nach Anspruch 1, dadurch gekennzeichnet, daß die Schalteinrichtung (12) parallel zum Generator (3) geschaltet wird.

3. Schaltung zur Durchführung des Verfahrens gemäß Anspruch 1 oder 2 mit einem Meßpunkt (6) zur Ermittlung des Ist-Wertes des in das Netz (5) einzuspeisenden Stroms, einem Drehstromsteller (7) zur Regelung des in das Netz (5) einzuspeisenden Stroms im Bereich bis zur Synchrondrehzahl des Generators (3), zuschaltbaren Kondensatoren (10) zur Blindleistungskompensation sowie mit einer mit einem Schütz (8) versehenen, den Drehstromsteller (7) überbrückenden Bypass-Schaltung (9),
**dadurch gekennzeichnet**,
daß die Kondensatoren (10) zur Blindleistungskompensation stufenweise zuschaltbar dem mit der Bypass-Schaltung (9) versehenen Drehstromsteller (7) an einem Anschlußpunkt (16) vorgeschaltet sind, so daß der gesamte in das Netz (5) einzuspeisende Strom durch den Drehstromsteller (7) reduzierbar ist, und daß nach Überschreiten eines vorgebbaren, in das Netz (5) einzuspeisenden maximalen Sollstroms im übersynchronen Drehzahlbereich des Generators (3) mindestens eine Schalteinrichtung (12) zur Regelung des in das Netz (5) einzuspeisenden Stroms am gleichen Anschlußpunkt (16) zuschaltbar ist, wobei die Zuschaltung der mindestens einen Schalteinrichtung (12) mit Hilfe einer Steuergröße der Schalteinrichtung (12) erfolgt.

4. Schaltung nach Anspruch 3, dadurch gekennzeichnet, daß die Schalteinrichtung (12) aus einem Schaltelement (13), beispielsweise einen Drehstromsteller oder Schütz, und Widerständen (14) besteht.

5. Schaltung nach Anspruch 3 oder 4, dadurch gekennzeichnet, daß die Schalteinrichtung (12) parallel zum Generator (3) geschaltet ist.
